# EUROPÄISCHE PATENTSCHRIFT

(11) **EP 1 272 305 B1**
(45) Veröffentlichungstag und Bekanntmachung des Hinweises auf die Patenterteilung: **03.11.2004**
(21) Anmeldenummer: 01925523.1
(22) Anmeldetag: 03.04.2001
(51) Int. Cl.: B23C 3/06, B23C 5/12, B23C 5/14, B23B 27/16, B23C 5/02, B23C 5/20, B23C 5/22

(54) **SCHNEIDEINSATZ FÜR NOCKENWELLENFRÄSER**
CUTTING INSERT FOR CAMSHAFT MILLING CUTTERS
PLAQUETTE DE COUPE DE FRAISE POUR ARBRES A CAMES

(30) Priorität: 08.04.2000 DE 10017645
(43) Veröffentlichungstag der Anmeldung: 08.01.2003
(73) Patentinhaber: SANDVIK AKTIEBOLAG, 811 81 Sandviken (SE)
(72) Erfinder: WERMEISTER, Günter, 40667 Meerbusch (DE)
(74) Vertreter: Weber, Dieter, Dr.
(86) Internationale Anmeldenummer: PCT/EP2001/003768
(87) Internationale Veröffentlichungsnummer: WO 2001/076796

(56) Entgegenhaltungen:
- DE-A- 3 824 348
- DE-A- 19 739 300

## Beschreibung

Die vorliegende Erfindung betrifft einen Schneideinsatz, insbesondere für das Fräsen von Nockenwellen, mit mindestens einer aus mehreren Abschnitten bestehenden Schneidkante. Derartige Schneideinsätze sind im Prinzip seit langem bekannt: siehe z.B. DE-A-19 739 300.

Die Herstellung von Nockenwellen erfolgt herkömmlich zumeist in der Art, daß zunächst eine Nokkenwelle in einer Form gegossen wird, wobei die gegossene Nockenwelle allerdings noch nicht die erforderliche Genauigkeit in ihren Maßen hat, als daß sie als Nockenwelle verwendbar wäre. Die dementsprechend mit einem Übermaß hergestellte, gegossene Nockenwelle wird daher weiteren Nachbearbeitungsschritten unterzogen. Teile der Nockenwelle, insbesondere Lagerzapfen derselben, haben eine exakt kreisförmige bzw. zylindrische Form und eine gemeinsame Achse. Diese Teile werden im Regelfall auf einer entsprechenden Drehmaschine durch Drehen bearbeitet bzw. hergestellt. Anschließend werden die Nockenkonturen gefräst, und zwar mit sogenannten Scheibenfräsern, an deren Umfang eine Vielzahl von Schneideinsätzen angeordnet sind, deren gemeinsames Schneidkantenprofil insgesamt dem Querschnittsprofil eines Nockens entspricht, wobei der Scheibenfräser an den entsprechenden Nocken herangeführt wird, und die Nockenwelle vollführt dann eine Umdrehung um 360°, wobei entsprechend dem Nockenverlauf der Abstand zwischen Fräserachse und Nockenwellenachse variiert wird, so daß sich insgesamt in einer Schnittebene senkrecht zur Achse der Nockenwelle die gewünschte Nockenkontur ergibt, Die Kontur des Nockens in einer Schnittebene, welche die Achse der Nockenwelle enthält, wird durch die Kontur der Schneidkanten am Scheibenfräser bestimmt. Die zylindrischen, koaxialen Abschnitte der Nockenwelle bleiben unbearbeitet oder werden anschließend noch durch Schleifen nachbearbeitet. Insgesamt sind also nach dem Gießen der Nockenwelle noch mindestens drei verschiedene Bearbeitungsgänge in drei verschiedenen Maschinen und entsprechenden Maschineneinspannungen erforderlich, um eine Nockenwelle in herkömmlicher Weise herzustellen.

Es ist kürzlich ein Verfahren entwickelt worden, mit welchem auf den Vorgang des Drehens der zylindrischen, konzentrischen Abschnitte verzichtet wird, und statt dessen diese zylindrischen Abschnitte ebenfalls mit Hilfe von Scheibenfräsern hergestellt werden, deren Schneideinsätze so ausgebildet und angeordnet sind, daß sie, wiederum in einem Schnitt gesehen, der die Achse der Nokkenwelle enthält, Teile der Kontur dieser zylindrischen Abschnitte sowie die Stirnflächen der Nocken bilden. Auf diese Weise können sowohl Teile der zylindrischen als auch die Nockenkonturen der Nockenwelle in einer einzigen Einspannung in derselben Fräsmaschine hergestellt werden. Die verbleibenden Teile der zylindrischen Abschnitte werden ausschließlich geschliffen oder bleiben roh und unbearbeitet.

Da die Nocken sich radial weiter nach außen erstrecken als die zylindrischen Abschnitte der Nok'kenwelle, müssen für die genaue Nachbearbeitung der zylindrischen Abschnitte durch Schleifen in den Eckbereichen am Übergang zwischen zylindrischem Abschnitt und einem benachbarten Nocken Freistiche hergestellt werden, d.h. kleine, nutartige Vertiefungen der Eckbereiche, damit die zylindrischen Abschnitte exakt definiert hergestellt werden können. Bei diesem Bearbeitungsvorgang müssen außerdem auch die Stirnflächen der Nocken hergestellt bzw. bearbeitet werden, was herkömmlich durch Drehen erfolgte. Dagegen müssen bei diesem Fräsvorgang die zylindrischen Flächen selbst nicht notwendigerweise hergestellt werden, da sie nur ein geringes Aufmaß haben und auch unmittelbar durch Schleifen fertiggestellt werden können. Demnach müssen die Schneideinsätze für das Planfräsen der Nockenstirnflächen sowie die Herstellung der Freistiche an den zylindrischen koaxialen Flächen der Nockenwelle eine völlig andere Kontur und einen anderen Schneidkantenverlauf aufweisen als für die Herstellung der Nockenkontur. Es ist daher auf den ersten Blick erforderlich, die unterschiedlichen Fräser, die zum einen die Freistiche im Eckbereich der zylindrischen Abschnitte und die Stirnflächen der Nocken herstellen, mit anderen Schneideinsätzen zu bestücken als die Fräser, welche die Nockenkontur herstellen. Da es sich bei diesen Fräsern um Scheibenfräser mit relativ großem Durchmesser handelt, an denen eine möglichst große Anzahl von Schneideinsätzen entlang des Umfanges angeordnet wird, um möglichst lange ununterbrochene Betriebsdauem mit einem Scheibenfräser zu erzielen, bedeutet dies selbstverständlich einen sehr hohen Schneideinsatzverbrauch, wenn jeweils die Schneidkanten der Einsätze eines Fräsers verschlissen sind.

Gegenüber diesem Stand der Technik liegt der vorliegenden Erfindung die Aufgabe zugrunde, einen Schneideinsatz zu schaffen, durch dessen Verwendung erhebliche Einsparungen erzielt werden können.

Diese Aufgabe wird durch einen Schneideinsatz gelöst, dessen Schneidkanten aus mehreren Schneidkantenabschnitten bestehen, die insgesamt die in Anspruch 1 definierte Kontur haben, wobei die besonderen Ausgestaltungen und Präzisierungen des Schneideinsatzes und seiner Kontur gemäß den Unteransprüchen noch zusätzliche Vorteile bieten.

Durch diese Schneidkantenkontur erreicht man, daß ein und derselbe Einsatz mehrfach verwendbar ist, insbesondere sowohl für die Herstellung der Nockenkontur als auch für die Herstellung der Freistiche an den zylindrischen Nockenwellenabschnitten sowie die Bearbeitung der Nockenstirnflächen verwendet werden kann.

Gemäß Anspruch 1 besteht die Schneidkante in der Draufsicht auf die zugehörige Spanfläche aus einem ersten geraden Schneidkantenabschnitt, einem sich daran anschließenden zweiten geraden Schneidkantenabschnitt, der einen Winkel von mehr als 90°, jedoch von weniger als 180° mit dem ersten geraden Schneidkantenabschnitt einschließt, und schließlich einem an den zweiten geraden Schneidkantenabschnitt anschließenden konvexen, runden Schneidkantenabschnitt, dessen Krümmungswinkel sich über einen Winkelbereich von mehr als 90° erstreckt. Der zweite, gerade Schneidkantenabschnitt und der dritte, runde Schneidkantenabschnitt definieren zusammen eine Art nasenartigen Vorsprung, der sich an das Ende des ersten, geraden Schneidkantenabschnittes anschließt. Mit dieser Kontur ist es möglich, einen Schneideinsatz sowohl für einen Fräser zu verwenden, der den Freistich an den zylindrischen Nockenwellenabschnitten und die Stirnflächen der Nokken herstellt, als auch an einem Fräser, der die eigentliche Nockenkontur herstellt. Man kann also die Schneideinsätze zuerst an dem einen Scheibenfräser verwenden, wobei zur Herstellung des Freistichs und der Stirnflächen der Nocken praktisch nur die nasenförmige Kontur der Schneidkanten des Schneideinsatzes zum Einsatz kommen und, nachdem diese Schneidkantenbereiche verschlissen sind, kann man denselben Schneideinsatz an einem Scheibenfräser verwenden, der die eigentliche Nockenkontur herstellt, wobei dann der erste gerade Schneidkantenabschnitt und der sich daran unmittelbar anschließende Teil des zweiten geraden Schneidkantenabschnittes in Gebrauch kommt, der noch eine Fase entlang der äußeren Kanten des Nockens herstellt. Zwar müssen dann an jedem Schneideinsatz all die erwähnten Schneidkantenabschnitte vorhanden sein, während man bei Verwendung unterschiedlicher Typen von Schneideinsätzen jeweils nur einen Teil der Schneidkanten benötigen würde, jedoch kann man auf diese Weise einen einheitlichen Schneideinsatztyp verwenden, der in entsprechend größerer Stückzahl hergestellt werden kann, beliebig austauschbar ist und der auch sonst in der Herstellung Kostenvorteile gegenüber zwei verschiedenen Schneideinsätzen hat, die ansonsten anstelle eines einzigen Schneideinsatzes gemäß der vorliegenden Erfindung hergestellt werden müßten. Dabei wird unterstellt, daß die unterschiedlichen Schneidkantenbereiche, die beim Freistechen und Herstellen der Stimflächen sowie beim Herstellen der Nockenkontur zum Einsatz kommen, jeweils in etwa gleich schnell verschleißen.

Besonders bevorzugt ist eine Ausführungsform des erfindungsgemäßen Schneideinsatzes, bei welchem der Winkelbereich γ, über welchen der gekrümmte Schneidkantenabschnitt sich erstreckt, etwa der Summe aus 90° und dem Komplementärwinkel entspricht, der sich als Differenz zwischen 180° und dem Winkel α zwischen den ersten und zweiten geraden Schneidkantenabschnitten ergibt. Wenn der Winkel 90 + β genau dem Krümmungswinkel des gekrümmten Schneidkantenabschnittes entspricht, so verläuft ein an den gekrümmten Abschnitt noch anschließender, gerader Nebenschneidkantenabschnitt exakt senkrecht zu dem ersten, geraden Schneidkantenabschnitt. Wenn der Krümmungswinkel etwas größer als 90 + β ist, so ergibt sich zwischen diesem eine Nebenschneidkante bildenden, dritten geraden Schneidkantenabschnitt und dem ersten geraden Schneidkantenabschnitt ein Winkel δ, der kleiner als 90° ist und der vorzugsweise zwischen 80 und 90°, insbesondere bei etwa 87° liegen sollte. Allerdings gibt es auch andere bevorzugte Ausführungsformen, bei denen dieser Winkel δ genau 90° beträgt.

Der Winkel α zwischen dem ersten und dem zweiten geraden Abschnitt sollte vorzugsweise zwischen 120 und 160°, noch bevorzugter zwischen 130 und 155° und insbesondere zwischen 145 und 150° liegen, was einer Abwinkelung der Fasenfläche einer Nockenkontur gegenüber der Umfangsfläche des Nockens um 30 bis 35° entspricht.

Zweckmäßigerweise hat, um einen möglichst gleichmäßigen Verschleiß aller Schneidkantenabschnitte bei den unterschiedlichsten Bearbeitungsvorgängen zu erzielen, der nasenförmige Schneidkantenvorsprung, gemessen in Richtung des ersten geraden Abschnittes, insgesamt eine Länge, die zwischen 1/3 und 2/3 der Länge des ersten Abschnittes liegt, vorzugsweise im Bereich von 40 bis 50% der Länge des ersten Schneidkantenabschnittes. Der zweite, gerade Schneidkantenabschnitt für sich betrachtet sollte eine Länge haben, die weniger als 40% der Länge des ersten geraden Abschnittes beträgt, insbesondere etwa im Bereich von 30 bis 35% des ersten geraden Abschnittes liegt.

Der Krümmungsradius des gekrümmten Schneidkantenabschnittes liegt vorzugsweise im Bereich zwischen 0,1 mm und 5 mm, insbesondere zwischen 0,2 und 1,5 und besonders bevorzugt zwischen 0,3 und 0,8 mm. Es versteht sich, daß dieser gekrümmte Schneidkantenverlauf auch angenähert werden kann durch abschnittweise gerade Schneidkantenstücke, die relativ zueinander abgewinkelt sind und durch einen entsprechenden gekrümmten Schneidkantenverlauf mit den erwähnten Krümmungsradien angenähert werden könnten.

Um die Verwendung des erfindungsgemäßen Schneideinsatzes noch ökonomischer gestalten. zu können, ist eine Ausführungsform bevorzugt, bei welcher mindestens zwei Schneidkanten vorgesehen sind, die zueinander spiegelbildlich ausgebildet sind und die eine gemeinsame Freifläche haben, jedoch durch den Schnitt mit zwei verschiedenen, auf gegenüberliegenden Seiten des Schneideinsatzes vorgesehenen Spanflächen gebildet werden. Diese Spanflächen sind in der bevorzugten Ausführungsform der Erfindung jedoch nicht parallel zueinander sondern schließen einen kleinen Winkel zwischen 5 und 30°, insbesondere zwischen 10 und 20° miteinander ein. Dies bewirkt, daß beim Herstellen des Freistiches und der Stimflächen der Nocken die Späne von den Nokken fortbewegt werden, da der äußere Teil des runden Scheidkantenabschnittes und die anschließende Nebenschneidkante auf diese Weise eine positive Schneidengeometrie erhalten.

Darüber hinaus kann in einer besonders bevorzugten Ausführungsform der Erfindung eine weitere spiegelbildliche Schneidkante auch an derselben Spanfläche angeordnet sein, wobei in der Kombination mit der spiegelbildlichen Anordnung einer Schneidkante an denselben Freiflächen sogar insgesamt vier gleichartige Schneidkanten entstehen können, von denen jeweils zwei zueinander spiegelbildlich angeordnet sind, die ohnehin für die Herstellung der Freistiche und Nockenkontur benötigt werden. Im Falle der spiegelbildlichen Ausbildung von Schneidkanten an derselben Spanfläche sollte die Nebenschneidkante vorzugsweise unter einem Winkel von 90° zum ersten geraden Schneidkantenabschnitt verlaufen, und die beiden Nebenschneidkanten der spiegelbildlich zueinander angeordneten Schneidkanten an derselben Spanfläche gehen dann ineinander über. Der Schneideinsatz muß dann an dem Scheibenfräser in einer leicht gekippten Anordnung montiert werden, damit die Nebenschneidkante nicht über ihre ganze Länge mit der Stirnfläche eines Nocken in Eingriff tritt sondern allenfalls der vordere, an den gekrümmten Abschnitt anschließende Teil der Nebenschneidkante aktiv ist. Gegebenenfalls können aber auch die beiden gegenüberliegenden Freiflächen einen kleinen Winkel miteinander einschließen, anstatt parallel ausgebildet zu werden. Dieser kleine Winkel könnte im Bereich zwischen 2 und 10°, insbesondere bei etwa 6° ± 2° liegen. In diesem Fall wäre der Winkel zwischen dem ersten geraden Schneidkantenabschnitt und der Nebenschneidkante wieder kleiner als 90°. Auch in diesem Fall müßte jedoch der Schneideinsatz in einer leicht gekippten Anordnung am Umfang einer Fräserscheibe montiert werden.

Weitere Vorteile, Merkmale und Anwendungsmöglichkeiten der vorliegenden Erfindung werden deutlich anhand der folgenden Beschreibung bevorzugter Ausführungsformen und der zugehörigen Figuren. Es zeigen:
Figur 1 eine perspektivische Ansicht einer ersten Ausführungsform eines Schneideinsatzes gemäß der vorliegenden Erfindung,
Figuren 2a bis c ebene Draufsichten auf den Schneideinsatz gemäß Figur 1 aus drei verschiedenen Richtungen,
Figur 3 einen Abschnitt einer Nockenwelle, die mit den erfindungsgemäßen Schneideinsätzen herzustellen ist,
Figur 4a, b je ein Schnittprofil des mit den Schneideinsätzen gemäß der Erfindung zu bestückenden Randes zweier Scheibenfräser zur Herstellung von Nockenwellen,
Figur 5a bis d Gesamt- und Teilansichten eines Scheibenfräsers für die Herstellung von Freistichen und Stirnflächen, wie sie in Figur 3 dargestellt sind,
Figur 6 a bis c Gesamt- und Teilansichten eines Scheibenfräsers für die Herstellung einer Nockenkontur, wie sie in Figur 3 dargestellt ist, und
Figur 7 eine Draufsicht auf die Spanfläche einer alternativen Ausführungsform eines Schneideinsatzes, der bezüglich einer zur Freifläche 6 parallelen Mittelebene symmetrisch ausgebildet ist und dadurch gegenüber der Ausführungsform nach Figur 1 und 2 zwei zusätzliche Schneidkanten aufweist.

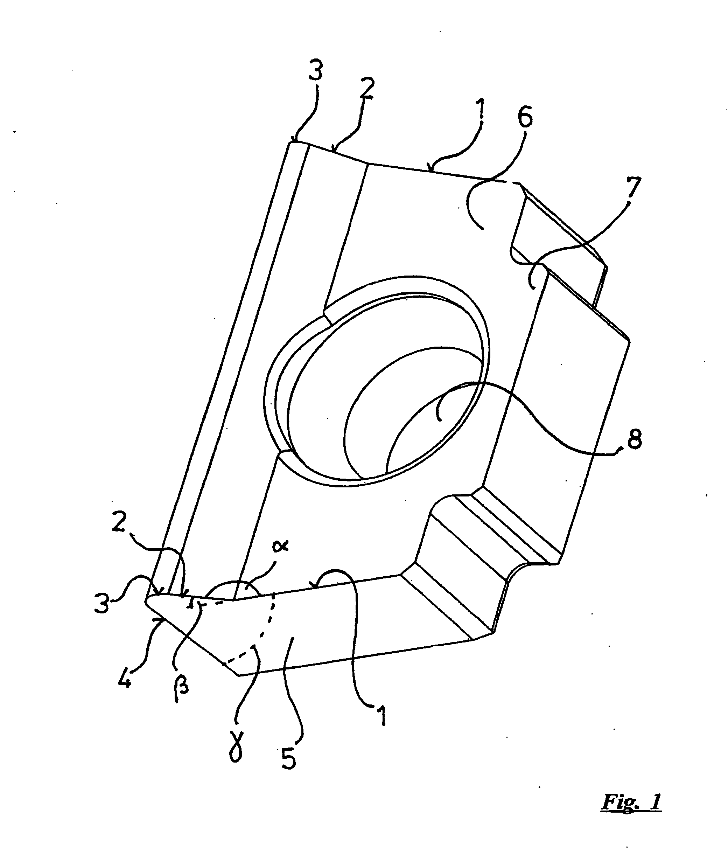

Man erkennt in Figur 1 in perspektivischer Darstellung eine erste Ausführungsform eines Schneideinsatzes gemäß der vorliegenden Erfindung. In grober Näherung hat der Schneideinsatz eine Quaderform, allerdings mit einigen Abweichungen von dieser Grundform, die im Folgenden noch erläutert werden. Zwei gegenüberliegende Flächen 5 des Quaders, die nicht exakt parallel, sondern unter einem Winkel von 16° zueinander geneigt verlaufen, bilden Spanflächen, die an Schneidkanten 1, 2, 3 anschließen, welche durch den Übergang zwischen der Spanfläche 5 und einer im wesentlichen senkrecht hierzu verlaufenden Freifläche 6 gebildet werden. Senkrecht zu der Freifläche 6 und durch diese hindurch erstreckt sich eine Befestigungsbohrung 8, die für die Aufnahme einer Schraube bzw. eines Schraubenkopfes zur Befestigung des Schneideinsatzes an einem Fräswerkzeug vorgesehen ist.

Die Freifläche 6 ist keine vollständig ebene Fläche, sondern sie weist neben einem ebenen Abschnitt entlang eines sich zwischen den gegenüberliegenden Spanflächen 5 erstreckenden Randes einen wulstartigen Vorsprung mit einem nasenförmigen Querschnitt auf, was sich in einer entsprechenden Form der beiden gegenüberliegenden Schneidkanten niederschlägt, die aus einem ersten geraden Schneidkantenabschnitt 1, einem zweiten, sich daran anschließenden, ebenfalls im wesentlichen geraden Schneidkantenabschnitt 2, der gegenüber dem ersten geraden Schneidkantenabschnitt 1 abgewinkelt ist, und einem sich an den zweiten geraden Schneidkantenabschnitt anschließenden, konvex gekrümmten Schneidkantenabschnitt 3 besteht. Der Krümmungswinkel, über welchen der runde Schneidkantenabschnitt 3 sich erstreckt, ist so bemessen, daß eine sich tangential an das Ende des gekrümmten Abschnittes 3 anschließende Nebenschneidkante 4 im wesentlichen senkrecht zu dem ersten geraden Schneidkantenabschnitt 1 erstreckt, wobei der Winkel zwischen Nebenschneidkante und geradem Schneidkantenabschnitt 1 vorzugsweise noch etwas geringer als 90° ist und z. B. 87° beträgt. Die Nebenschneidkante 4 wird gebildet durch den Übergang zwischen der Spanfläche 5 und einer der umlaufenden Randflächen des "Quaders", der die Grundform des Schneideinsatzes darstellt. Die dieser Randfläche gegenüberliegende Randfläche weist einen vorspringenden Abschnitt 7 auf, der im wesentlichen den Zweck hat, eine hinreichende Bruchfestigkeit des Schneideinsatzes bei einer gleichzeitig entsprechend groß bemessenen Befestigungsbohrung 8 zu gewährleisten, wobei der Durchmesser der Befestigungsbohrung 8 wiederum hinreichend groß bemessen sein muß, damit die darin zu verwendende Befestigungsschraube eine genügende Festigkeit hat, um den Schneideinsatz bei den auftretenden Schneidkräften sicher an seinem Platz zu halten. Es versteht sich, daß man auf den Vorsprung 7 auch ohne weiteres verzichten kann, indem man beispielsweise entweder die Befestigungsbohrung 8 im Verhältnis zur Größe des Schneideinsatzes kleiner macht oder aber die Spanflächen 5 entsprechend verlängert, den Vorsprung 7 also in die etwa quaderförmige Grundgestalt mit einbeziehen würde, was jedoch dazu führen würde, daß man mehr Hartmetallmaterial verbrauchen und der Schneidkantenabschnitt 1 über das tatsächlich benötigte Maß hinaus verlängert würde.

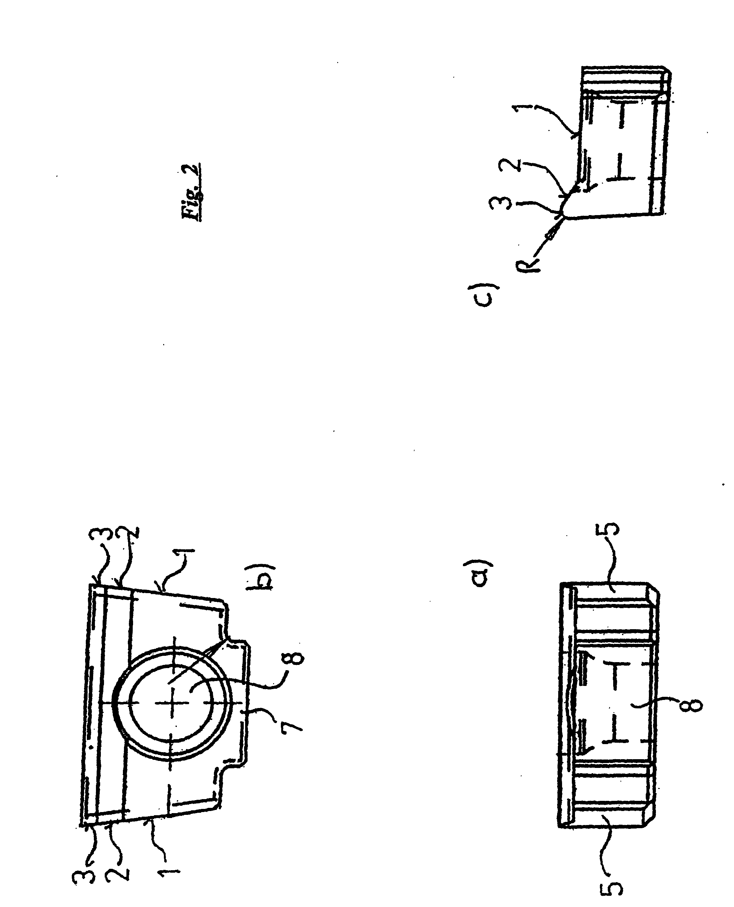

Die Figuren 2a bis c zeigen den in Figur 1 perspektivisch dargestellten Schneideinsatz in einer Ansicht von rechts auf den Vorsprung 7 (Figur 2a), in einer Draufsicht auf die Freifläche 6 von oben (Figur 2b) und in einer Ansicht auf eine Spanfläche 5 (Figur 2c), jedoch nicht senkrecht auf die Spanfläche 5, sondern entlang der durch den Pfeil C in Figur 2b angegebenen Richtung.

Da die Strukturen von Nockenwellen relativ klein sind, müssen auch die erfindungsgemäßen Schneideinsätze entsprechend klein sein. Andererseits ist es bei Scheibenfräsern, bei welchen die Schneideinsätze entlang des Umfanges eines Scheibenfräsers befestigt werden und die aktiven Schneidkanten auf dem Umfang des Scheibenfräsers wirksam werden, im allgemeinen unumgänglich, daß die Schneideinsätze mit Befestigungsschrauben montiert und befestigt werden und zu diesem Zweck auch eine entsprechende Befestigungsbohrung aufweisen müssen. Wegen der erheblichen Schnittkräfte, die beim Fräsen außerdem noch mehr oder weniger stoßartig auf die einzelnen Schneideinsätze wirken, kann man bei den zu verwendenden Befestigungsschrauben und demzufolge auch bei den entsprechenden Befestigungsbohrungen der Schneideinsätze auf einen gewissen Mindestdurchmesser nicht verzichten. Figur 2a zeigt in gestrichelten Linien die Konturen der entsprechenden Befestigungsbohrung, während man rechts und links die beiden Spanflächen 5 und oben die wulstartige Erhebung der Freifläche 6 erkennt. In der Draufsicht auf die Freifläche 6 gemäß Figur 2b sieht man nochmals die relativ große Befestigungsbohrung und man erkennt weiterhin, daß der Vorsprung 7 am Schneideinsatz zusätzliches Material liefert, welches dem Schneideinsatz trotz der großen Befestigungsbohrung eine hinreichende Festigkeit gibt. Besonders deutlich wird in dieser Ansicht, daß die Spanflächen 5 nicht parallel zueinander und auch nicht senkrecht zu den angrenzenden Randflächen verlaufen, sondern daß sie gegenüber diesen Randflächen und symmetrisch zueinander geneigt sind, und zwar in der dargestellten Ausführungsform konkret um einen Winkel von ca. 16° gegeneinander, wobei die Neigung der Spanfläche zu der jeweils angrenzenden Randfläche um jeweils etwa 8° von einem 90°-Winkel abweicht.

In Figur 2c erkennt man schließlich sehr deutlich die für die vorliegende Erfindung wesentliche Schneidkantenkontur. Man sieht den ersten, geraden Schneidkantenabschnitt 1, den zweiten, geraden Schneidkantenabschnitt 2, der mit dem ersten Schneidkantenabschnitt einen Winkel von ca. 150° einschließt, an den zweiten, geraden Schneidkantenabschnitt angrenzend einen runden Schneidkantenabschnitt 3, der sich über einen Bogen von etwa 120° oder noch etwas weiter erstreckt, so daß schließlich eine Nebenschneidkante 4 mit dem ersten, geraden Schneidkantenabschnitt einen Winkel von 87° einschließt. Diese geringfügige Einwärtsneigung der Nebenschneidkante 4 hat den Zweck, unterhalb der äußersten aktiven Ecke der runden Schneidkante 3, durch welche die Stimflächen von Nocken bearbeitet werden, einen Freiwinkel von ca. 3° freizustellen, damit nicht die gesamte Nebenschneidkante 4 mit der Stirnfläche eines Nocken in Eingriff tritt. Allerdings könnte man den gleichen Effekt auch erreichen, wenn die Nebenschneidkante sich im wesentlichen senkrecht zu dem ersten, geraden Schneidkantenabschnitt erstreckt und der Schneideinsatz lediglich um etwa 3° verkippt am Umfang des Fräsers montiert wird.

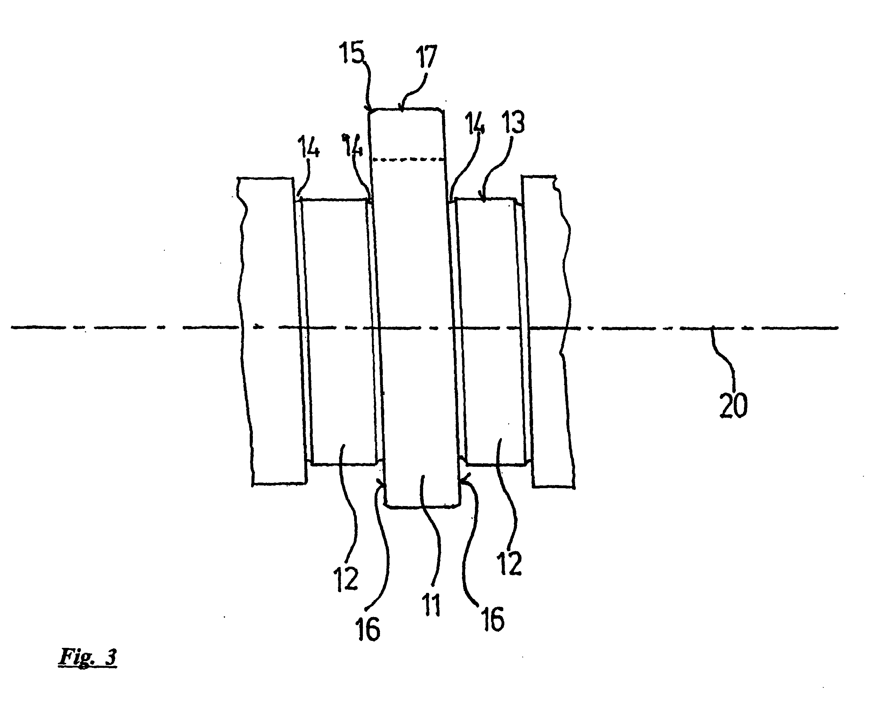

Figur 3 zeigt einen typischen Abschnitt einer Nockenwelle 10, mit einem Nocken 11 und zwei beidseitig an diesen Nocken 11 anschließenden zylindrischen Nockenwellenabschnitten 12, sowie weiteren folgenden Abschnitten, die in dieser Darstellung weggebrochen sind. Notwendigerweise hat der Nocken 11, um seiner Nockenfunktion gerecht werden zu können, in einer Draufsicht entlang der Achse 20 keinen kreisförmigen, sondern einen mehr oder weniger ovalen oder eiförmigen Umriß. Die Nockenüberhöhung, d.h. die Differenz zwischen dem kleinsten und größten radialen Abstand der Umfangsfläche des Nockens 11 zur Achse 20 ist durch eine zusätzliche gestrichelte Linie angedeutet.

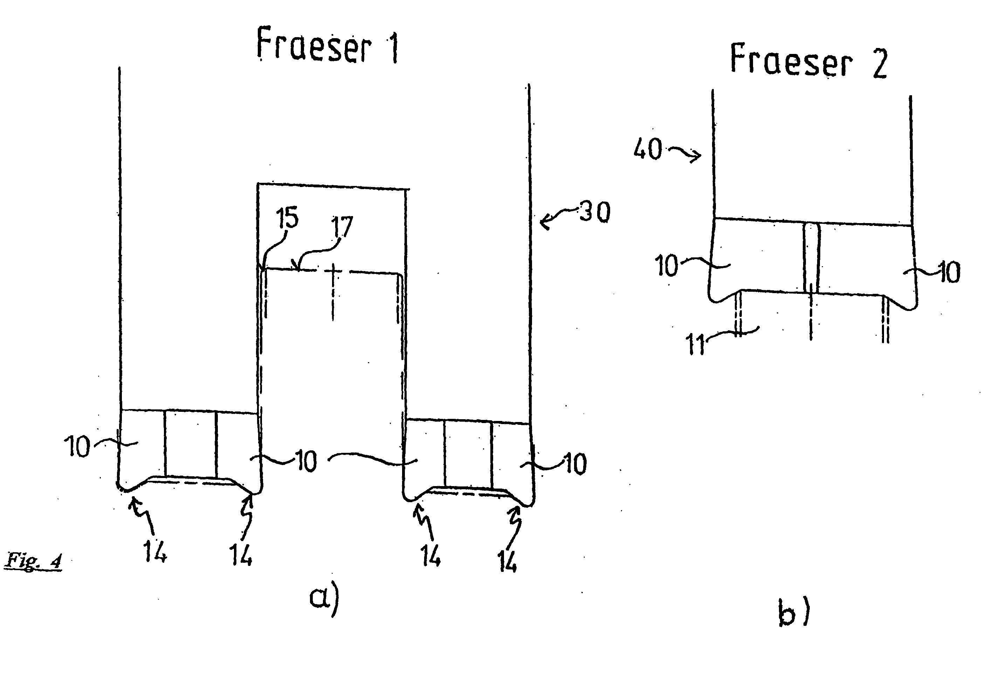

Die Eckbereiche der zylindrischen Abschnitte 12 am Übergang zu den Nockenstirnflächen 16 und ebenso auch am Übergang zu weiteren anschließenden Teilen der Nockenwelle weisen sogenannte "Freistche" 14 auf, durch welche undefinierte Eckbereiche vermieden werden sollen, die ansonsten beim Schleifen der Umfangsfläche 13 der zylindrischen Wellenabschnitte 12 entstehen könnten. Die Nockenwelle wird im allgemeinen als ein Gußteil hergestellt, wobei alle Abschnitte der Nockenwelle ein geringes Übermaß aufweisen und ihre endgültige präzise Form erst durch Fräsen und andere Nachbearbeitungsvorgänge erhalten. Im vorliegenden Fall werden alle Konturen mit Ausnahme der zylindrischen Oberflächen 13 durch Fräsen hergestellt. Zur Beschreibung der Bearbeitung wird zusätzlich auch noch auf Figur 4 Bezug genommen.

In Figur 4 sind die Konturen der Randbereiche zweier Fräser im Schnitt dargestellt. Wie man erkennt, besteht der Fräser 30 aus zwei fest miteinander verbundenen Scheibenfräsern 31, 31' oder anders gesprochen aus einem Scheibenfräser mit einer entlang ihres Umfangs vorgesehenen, umlaufenden Nut 32, die für die Aufnahme eines Nockens 11 vorgesehen ist. Die beiden rechts und links dieser Nut 32 gelegenen Scheibenabschnitte 31, 31' sind jeweils mit erfindungsgemäßen Schneideinsätzen bestückt, deren gerade Schneidkantenabschnitte 1, wie erkennbar, um ein erhebliches Stück überlappen. Es versteht sich, daß die einzelnen Schneideinsätze nicht in derselben Ebene liegen, sondern in Umfangsrichtung hintereinander versetzt angeordnet sind, und zwar abwechselnd in der Weise, daß bei einem Schneideinsatz die in Figur 1 vorn erkennbare Schneidkante in Eingriff kommt, während der nächstfolgende Schneideinsatz 10 demgegenüber um 180° (um die Achse der Bohrung 8) verdreht ist, so daß seine in Figur 1 hinten liegende Schneidkante in Eingriff kommt, was dazu führt, daß der zweite, geneigt verlaufende Schneidkantenabschnitt und auch der runde Schneidkantenabschnitt abwechselnd mal rechts und mal links an einem Scheibenfräser liegt. In Figur 4 ist in der Mitte in der Nut 32 die Kontur eines Nockens 11 angedeutet, und man erkennt unten in gestrichelten Linien auch die Kontur der zylindrischen Umfangsfläche 13 eines zylindrischen Abschnittes 12. Wie man weiterhin sieht, werden durch die nasenförmigen Vorsprünge der Schneidkanten, die durch den runden Schneidkantenabschnitt 3 und den zweiten geraden Schneidkantenabschnitt 2 gebildet werden, die Freistiche 14 erzeugt. Außerdem trägt der äußere Bereich des runden Schneidkantenabschnitts 3 das Übermaß an den Stirnflächen 16 des Nockens 11 ab. Da der Fräser 30 praktisch aus zwei miteinander verbundenen Scheibenfräsern besteht, werden hierdurch gleichzeitig die Freistiche an zwei zu dem Nocken 11 benachbarten zylindrischen Wellenabschnitten 12 hergestellt, und es werden auch gleichzeitig beide Stirnflächen 16 des Nocken 11 bearbeitet und auf ihr endgültiges Maß gebracht. Wie man anhand der Figur 4 erkennt, kommen dabei insgesamt nur der runde Schneidkantenabschnitt und ein mehr oder weniger großer Teil des zweiten geraden Schneidkantenabschnittes 2 in Eingriff mit der Nockenwelle, d.h. nur diese Schneidkantenteile erfahren bei diesem ersten Fräsvorgang einen Verschleiß.

Der Fräser 40 besteht aus einem einzelnen Scheibenfräser, an welchem exakt die gleichen Schneideinsätze 1 gemäß der vorliegenden Erfindung die eigentliche Nockenkontur, d.h. die Umfangsoberfläche des Nockens 11 hergestellt wird. In diesem Fall überlappen die geraden Schneidkantenabschnitte 1, wie man erkennt, nur geringfügig, und von den zweiten geraden Schneidkantenabschnitten 2 wird nur der unmittelbar an den ersten Abschnitt 1 angrenzende Teil benutzt, um eine Fase 15 entlang der Kanten am Übergang zwischen Umfangsfläche und Stirnfläche 16 des Nockens 11 herzustellen. Mit anderen Worten, beim Einsatz des Fräsers 40 werden von den Schneideinsätzen exakt diejenigen Abschnitte der Schneidkante benutzt, die bei der Verwendung an dem Fräser 30 gemäß der Darstellung in Figur 4a unbenutzt geblieben waren. Bei der Herstellung der Nockenwelle kann man beispielsweise so vorgehen, daß der Fräser 30 von der einen Seite her radial in Richtung der Achse 20 der Nockenwelle bewegt wird, wobei die Nockenwelle 10 eine, im Vergleich zur Drehung der Fräser langsame, Umdrehung vollführt, während der Fräser 2 von der entgegengesetzten Seite her radial in Richtung des Nocken zugestellt wird und während der Bearbeitung der Nockenoberfläche entsprechend der gewünschten Nockenkontur den Abstand zur Achse 20 der Nockenwelle variiert.

Auch wenn man Schneideinsätze verwenden wollte, die jeweils nur die für einen einzigen Einsatzzweck benötigten Schneidkantenteile aufweisen, so müßten diese dennoch eine gewisse Größe aufweisen, damit für die bereits angesprochenen Befestigungsschrauben eine ausreichend bemessene Befestigungsbohrung bereitgestellt werden könnte.

Wenn nach einer entsprechenden Zahl von Bearbeitungsvorgängen die jeweils verwendeten Schneidkantenabschnitte verschlissen sind, können die Schneideinsätze des Fräsers 30 gegen die Schneideinsätze des Fräsers 40 ausgetauscht werden, so daß anschließend die bis dahin unverschlissenen Schneidkantenabschnitte zum Einsatz kommen. Auf diese Art und Weise wird die Wirtschaftlichkeit jedes einzelnen Schneideinsatzes praktisch verdoppelt.

Es versteht sich, daß vor dem Austausch zwischen den beiden Fräsern 30 und 40 die einzelnen Schneideinsätze auch an jedem der Fräser selbst zunächst noch um 180° gewendet und paarweise ausgetauscht werden können, so daß die zunächst unbenutzt gebliebenen Schneidkanten an der jeweils in Bearbeitungsrichtung gesehen hinteren Spanfläche 5 zum Einsatz kommen.

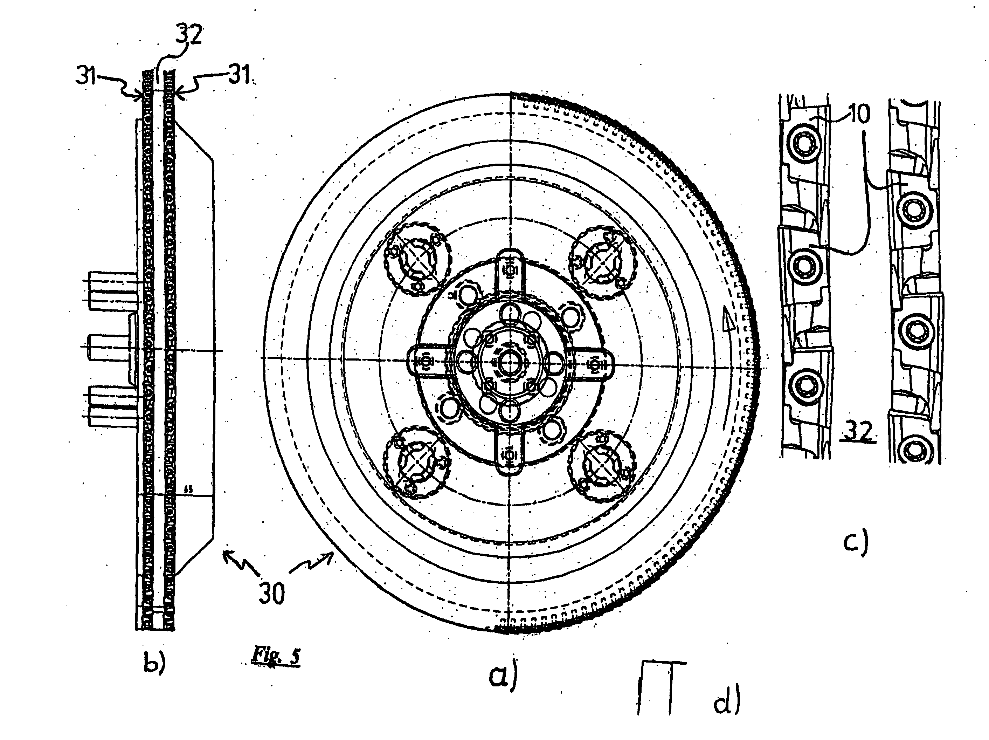

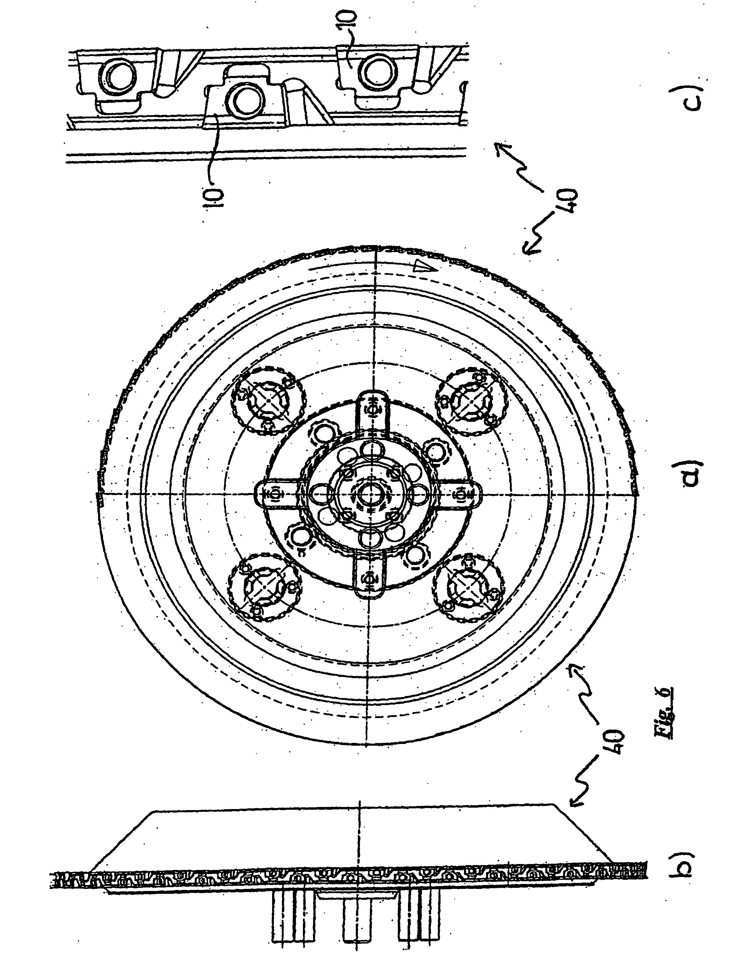

In den Figuren 5 und 6 sind nochmals verschiedene Ansichten der zum Einsatz kommenden Fräswerkzeuge dargestellt. Figur 5a zeigt eine axiale Draufsicht auf einen Scheibenfräser 30 für die Herstellung der Freistiche 14 an den zylindrischen Abschnitten 12 und der Nockenstimflächen 16,. In Figur 5a erkennt man eine Draufsicht in axialer Richtung, wobei in der rechten Hälfte eine Vielzahl hintereinander angeordneter Schneideinsätze erkennbar ist. Figur 5b zeigt eine Draufsicht auf den Umfang des Scheibenfräsers 30, die effektiv aus zwei in relativ engem Abstand nebeneinander angeordneten Scheibenfräsem besteht, die einstückig oder auch auf andere Weise miteinander verbunden sein können. Figur 5c zeigt einen vergrößerten Ausschnitt aus der Draufsicht gemäß Figur 5b. Man erkennt, daß die einzelnen Schneideinsätze abwechselnd um 180° gegeneinander verdreht entlang des Umfanges der beiden Scheibenteile angeordnet sind, wobei die geraden Schneidkantenabschnitte 1 aufeinanderfolgender Schneideinsätze weitgehend überlappen, während die in Form eines nasenförmigen Vorsprungs ausgebildeten Endabschnitte, bestehend aus dem zweiten geraden Abschnitt 2 und dem runden Schneidkantenabschnitt 3, abwechselnd links und rechts an einer Scheibe vorgesehen sind. Der in dieselbe Ebene projizierte, lichte Abstand zwischen aktiven Schneidkantenteilen zwischen den beiden Scheibenfräsem definiert die Breite bzw. Dicke der einzelnen Nocken, d.h. den Abstand zwischen den gegenüberliegenden Nockenstirnflächen 16.

In Figur 5d ist nochmals der Arbeitsbereich der Schneidkantenabschnitte dieses Fräsers eingezeichnet.

Figur 6 zeigt völlig analog zu Figur 5 verschiedene Ansichten des Fräsers 40 zur Herstellung der Nockenkontur. Dieser Fräser besteht aus einem einzigen Scheibenfräser, und in Figur 6a ist wiederum dieser Scheibenfräser mit einer Vielzahl von Schneideinsätzen bestückt (in der rechten Hälfte) dargestellt. Figur 6b zeigt eine Draufsicht auf die mit Schneideinsätzen bestückte Umfangsoberfläche der Scheibe, und Figur 6c ist wiederum ein Ausschnitt aus Figur 6b. Die Anordnung der Schneideinsätze ist im Prinzip derjenigen an einem der Scheibenfräser des Fräsers 30 ähnlich, jedoch überlappen in diesem Fall die geraden Schneidkantenabschnitte 1 nur geringfügig. Der aktive Arbeitsbereich wird in diesem Fall gebildet durch die ersten geraden Schneidkantenabschnitte 1 und den unmittelbar angrenzenden Teil der zweiten geraden Schneidkantenabschnitte 2.

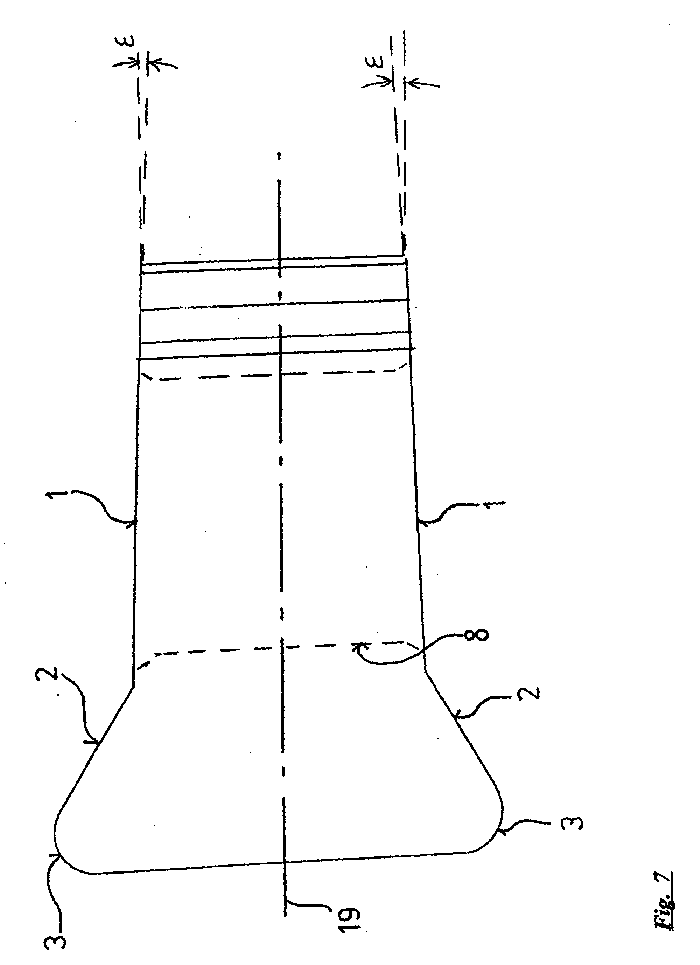

In Figur 7 ist eine weitere vorteilhafte Ausführungsform der Erfindung dargestellt, bei welcher an jeder der Spanflächen 5 symmetrisch zueinander zwei Schneidkanten, wiederum jeweils bestehend aus Schneidkantenabschnitten 1, 2 und 3, angeordnet sind. Die beiden Freiflächen und somit auch die beiden an derselben Spanfläche vorgesehenen geraden Schneidkantenabschnitte 1 können um einen kleinen Winkel von z. B. 6° gegeneinander geneigt sein. Dies ermöglicht eine leicht verkippte Montierung der Schneideinsätze insbesondere beim Einsatz an dem Fräser 30, so daß die Nebenschneidkante 4 nicht oder nur in ihrem unmittelbarem Übergangsbereich zum runden Schneidkantenabschnitt 3 mit den Nockenstirnflächen 16 in Eingriff tritt. Gleichzeitig wird bei dieser Ausgestalltung durch das Verkippen der Schneidkantenabschnitt 1 nicht über eine achsparallele Stellung zum Fräser hinaus angehoben, so daß auch nicht die Gefahr besteht, daß etwa beim Einsatz des Fräsers 30 die freien Endabschnitte der Schneidkantenteile 1 mit der Umfangsfläche 13 der zylindrischen Wellenabschnitte 12 in Eingriff kommen. Auch bei der Verwendung an dem Fräser 40 müssen' dann die Schneideinsätze um einen Winkel von z. B. 3° verkippt montiert werden, damit die Schneidkantenabschnitte 1 achsparallel zur Achse des Fräsers (und damit auch zur Achse der Nokkenwelle) verlaufen.

Eine verkippte Montage an dem Fräser 30 ist jedoch auch möglich, wenn die beiden Schneidkanten (an derselben Spanfläche) exakt parallel verlaufen, solange der Kippwinkel genügend klein ist und das Übermaß der Flächen 13 der zylindrischen Wellenabschnitte 12 hinreichend gering ist, so daß trotz der Verkippung der Schneidkantenabschnitte 1 aus der achsparallelen Ausrichtung die Enden dieser Schneidkantenabschnitte 1 dennoch nicht mit der Oberfläche 13 in Eingriff kommen.

Die Ausführungsform gemäß Figur 7 hat sogar vier doppelt verwendbare Schneidkanten und verbessert damit nochmals die Effizienz beim Einsatz entsprechender Schneideinsätze um einen Faktor 2. Allerdings muß dann auch der Sitz für die einzelnen Schneideinsätze an den Scheibenfräsern entsprechend umgestaltet werden, so daß die jeweils in dem Sitz aufgenommenen Schneidkanten nicht belastet oder beschädigt werden. Mit der strichpunktierten Linie 19 ist eine Symmetrieebene angegeben, bezüglich welcher die obere Hälfte des Schneideinsatzes spiegelbildlich zur unteren Hälfte ausgebildet ist.

## Patentansprüche

1. Schneideinsatz, insbesondere für das Fräsen von Nockenwellen, mit mindestens einer Schneidkante, die aus mehreren Schneidkantenabschnitten besteht, **dadurch gekennzeichnet daß** die Schneidkante, in einer ebenen Draufsicht auf die an die Schneidkante anschließende Spanfläche, folgende geometrischen Zuordnung aufweist :
- einen ersten, gerade verlaufenden Abschnitt (1),
- einen zweiten, gerade verlaufenden Abschnitt (2), der an den ersten Abschnitt (1) anschließt und mit diesem einen Winkel (α) von mehr als 90 und weniger als 180° einschließt, und
- einen dritten Schneidkantenabschnitt, der konvex gekrümmt verläuft und sich an das dem ersten Abschnitt (1) abgewandten Ende des zweiten Abschnittes (2) anschließt und dessen gekrümmter Verlauf, der auch aus geraden, zueinander abgewinkelten Teilstücken bestehen kann, sich über einen Winkelbereich von mehr als 90° erstreckt.

2. Schneideinsatz nach Anspruch 1, **dadurch gekennzeichnet, daß** der Krümmungwinkel (α) des gekrümmten Schneidkantenabschnittes (3) sich über einen Winkelbereich erstreckt, der etwa gleich der Summe aus 90° und dem zu dem Winkel (α) zwischen den geraden ersten und zweiten Abschnitten (1, 2) komplementären Winkel (β) ist (β = 180° -α), oder geringfügig größer als die Summe aus 90 + β ist.

3. Schneideinsatz nach Anspruch 1 oder 2, **dadurch gekennzeichnet, daß** der mittlere Krümmungsradius (R) des gekrümmten Schneidkantenabschnittes (3) zwischen 0,1 mm und 5 mm, vorzugsweise zwischen 0,2 und 1,5 mm und insbesondere zwischen 0,3 und 0,8 mm liegt.

4. Schneideinsatz nach einem der Ansprüche 1 bis 3, **dadurch gekennzeichnet, daß** der Winkel α zwischen den geraden ersten und zweiten Abschnitten (1, 2) zwischen 120 und 160°, vorzugsweise zwischen 130 und 155 und insbesondere zwischen 145 und 150° liegt.

5. Schneideinsatz nach einem der Ansprüche 1 bis 4, **dadurch gekennzeichnet, daß** die in Richtung des ersten geraden Abschnittes (1) gemessene Gesamterstreckung des zweiten und dritten Abschnittes (2, 3) zwischen 1/3 und 2/3, insbesondere zwischen 40% und 50% der Länge des ersten Schneidkantenabschnittes (1) beträgt.

6. Schneideinsatz nach einem der Ansprüche 1 bis 5, **dadurch gekennzeichnet, daß** die Länge des zweiten geraden Abschnittes weniger als 40% und insbesondere zwischen 30 und 35% der Länge des ersten geraden Abschnittes (1) beträgt.

7. Schneideinsatz nach einem der Ansprüche 1 bis 6, **dadurch gekennzeichnet, daß** der gekrümmte Schneidkantenabschnitt (3) an seinem dem zweiten, geraden Abschnitt (2) abgewandten Ende in einen dritten geraden Nebenschneidkantenabschnitt (4) übergeht.

8. Schneideinsatz nach Anspruch 7, **dadurch gekennzeichnet, daß** in der Draufsicht auf die Spanfläche der Winkel zwischen dem ersten geraden Abschnitt und dem dritten geraden Abschnitt kleiner als 90° und größer als 80° ist.

9. Schneideinsatz nach einem der Ansprüche 1 bis 8, **dadurch gekennzeichnet, daß** er mindestens zwei gleichartige, spiegelbildlich zueinander angeordnete Schneidkanten (1, 2, 3, 4) aufweist, die eine gemeinsame Freifläche (6) und auf voneinander abgewandten Seiten liegende Spanflächen (5) aufweisen.

10. Schneideinsatz nach Anspruch 9, **dadurch gekennzeichnet, daß** die auf gegenüberliegenden Seiten angeordneten Spanflächen (5) bzw. die jeweiligen ersten geraden Schneidkantenabschnitte dieser Spanflächen in der Draufsicht auf eine Freifläche einen Winkel zwischen 5 und 30°, vorzugsweise zwischen 10 und 20°, insbesondere etwa 16 ± 2° miteinander einschließen.

11. Schneideinsatz nach einem der Ansprüche 1 bis 10, **dadurch gekennzeichnet, daß** der Schneideinsatz mindestens zwei spiegelbildlich angeordnete Schneidkanten (1, 2, 3, 4) hat, die eine gemeinsame Spanfläche haben und durch den Schnitt dieser Spanfläche mit zwei auf gegenüberliegenden Seiten des Schneideinsatzes vorgesehenen Freiflächen gebildet werden.

12. Schneideinsatz nach einem der Ansprüche 1 bis 11, **dadurch gekennzeichnet, daß** eine sich senkrecht zur Freifläche erstreckende Befestigungsbohrung (8) vorgesehen ist.

13. Schneideinsatz nach einem der Ansprüche 11 oder 12, **dadurch gekennzeichnet, daß** die einander gegenüberliegenden Freiflächen in einer Draufsicht auf die Spanfläche einen Winkel zwischen 2 und 15°, vorzugsweise zwischen 4 und 8° miteinander einschließen.

## Claims

1. Cutting insert, in particular for milling camshafts, with at least one cutting edge that is composed of a plurality of cutting edge sections, **characterised in that** the cutting edge has the following geometrical allocations when viewed in a planar plan view of the face adjoining the cutting edge:
- a first, straight section (1),
- a second, straight section (2) that adjoins the first section (1) and forms an angle (α) therewith of more than 90 and less than 180°, and
- a third cutting edge section that is convexly curved and adjoins the end of the second section (2) facing away from the first section (1), and the curved configuration of which, that can also be composed of straight portions angled with respect to one another, extends over an angular range of more than 90°.

2. Cutting insert according to claim 1, **characterised in that** the angle of curvature (α) of the curved cutting edge section (3) extends over an angular range that is approximately equal to the sum of 90° and the angle (β) complementary to angle (α) between the straight first and second sections (1, 2), (β = 180° - α) or slightly larger than the sum of 90 + β.

3. Cutting insert according to claim 1 or 2, **characterised in that** the average radius of curvature (R ) of the curved cutting edge section (3) is between 0.1 mm and 5 mm, preferably between 0.2 and 1.5 mm, and in particular between 0.3 and 0.8 mm.

4. Cutting insert according to one of claims 1 to 3, **characterised in that** the angle α between the straight first and second sections (1, 2) is between 120 and 160°, preferably between 130 and 155, and particularly between 145 and 150°.

5. Cutting insert according to one of claims 1 to 4, **characterised in that** the total extent in the direction of the first, straight section (1) of the second and third sections (2, 3) is between 1/3 and 2/3, in particular between 40% and 50%, of the length of the first cutting edge section (1).

6. Cutting insert according to one of claims 1 to 5, **characterised in that** the length of the second, straight section is less than 40% and in particular between 30 and 35% of the length of the first, straight section (1).

7. Cutting insert according to one of claims 1 to 6, **characterised in that** the curved cutting edge section (3) merges at its end facing away from the second, straight section (2) into a third, straight auxiliary cutting edge section (4).

8. Cutting insert according to claim 7, **characterised in that** in plan view of the face, the angle between the first, straight section and the third, straight section is less than 90° and greater than 80°.

9. Cutting insert according to one of claims 1 to 8, **characterised in that** it is provided with at least two identical cutting edges (1, 2, 3, 4) arranged in mirror image to one another, that have a common flank (6) and faces (5) lying on sides facing away from one another.

10. Cutting insert according to claim 9, **characterised in that** the faces (5) or the respective first, straight cutting edge sections of these faces, arranged on opposite sides, in plan view of a flank form an angle between 5 and 30°, preferably between 10 and 20°, in particular approximately 16 ± 2° to one another.

11. Cutting insert according to one of claims 1 to 10, **characterised in that** the cutting insert has at least two cutting edges (1, 2, 3 4) arranged in mirror-image that have a common face and that are formed by means of the cut of this face with two flanks provided on opposite sides of the cutting insert.

12. Cutting insert according to one of claims 1 to 11, **characterised in that** a fixing bore (8) is provided extending perpendicular to the flank.

13. Cutting insert according to one of claims 11 or 12, **characterised in that** in plan view of the face, the flanks opposite one another form an angle of between 2 and 15°, preferably of between 4 and 8° to one another.

## Revendications

1. Elément rapporté de coupe, en particulier pour le fraisage d'arbres à cames, comportant au moins une arête de coupe qui est constituée de plusieurs portions d'arête de coupe, **caractérisé en ce que** l'arête de coupe présente, dans une vue en plan de dessus de la face de coupe et se raccordant à l'arête de coupe, la configuration géométrique suivante :
- une première portion rectiligne (1),
- une deuxième portion rectiligne (2) qui se raccorde à la première portion (1) et qui forme avec celle-ci un angle (α) de plus de 90° et de moins de 180°, et
- une troisième portion d'arête de coupe, incurvée convexe, se raccordant à l'extrémité, opposée à la première portion (1), de la deuxième portion (2) et présentant une courbure qui peut également être constituée d'éléments rectilignes disposés angulairement entre eux et qui s'étend sur une plage angulaire de plus de 90°.

2. Elément rapporté de coupe selon la revendication 1, **caractérisé en ce que** l'angle de courbure (α) de la portion d'arête de coupe incurvée (3) s'étend sur une plage angulaire qui est à peu près égale à la somme de 90° et de l'angle (β) complémentaire de l'angle (α) formé entre les première et deuxième portions rectilignes (1, 2) (β = 180°-α), ou qui est légèrement supérieure à la somme de 90°+ β.

3. Elément rapporté de coupe selon la revendication 1 ou 2,
**caractérisé en ce que** le rayon de courbure moyen (R) de la portion d'arête de coupe incurvée (3) est compris entre 0,1 mm et 5 mm, avantageusement entre 0,2 et 1,5 mm et en particulier entre 0,3 et 0,8 mm.

4. Elément rapporté de coupe selon l'une des revendications 1 à 3,
**caractérisé en ce que** l'angle α compris entre les première et deuxième portions rectilignes (1, 2) est compris entre 120 et 160°, avantageusement entre 130 et 155° et en particulier entre 145 et 150°.

5. Elément rapporté de coupe selon l'une des revendications 1 à 4,
**caractérisé en ce que** l'extension totale, mesurée en direction de la première portion rectiligne (1), des deuxième et troisième portions (2, 3) est comprise entre le tiers et les deux tiers, en particulier entre 40 % et 50 %, de la longueur de la première portion d'arête de coupe (1).

6. Elément rapporté de coupe selon l'une des revendications 1 à 5,
**caractérisé en ce que** la longueur de la deuxième portion rectiligne est inférieure à 40 % et en particulier est comprise entre 30 et 35 % de la longueur de la première portion rectiligne (1).

7. Elément rapporté de coupe selon l'une des revendications 1 à 6,
**caractérisé en ce que** la portion d'arête de coupe incurvée (3) converge, au niveau de son extrémité opposée à la deuxième portion rectiligne (2), vers une troisième portion d'arête de coupe secondaire rectiligne (4).

8. Elément rapporté de coupe selon la revendication 7, **caractérisé en ce que**, dans la vue de dessus de la face de coupe, l'angle compris entre la première portion rectiligne et la troisième portion rectiligne est inférieur à 90° et supérieur à 180°.

9. Elément rapporté de coupe selon l'une des revendications 1 à 8,
**caractérisé en ce qu'**il comporte deux arêtes de coupe (1, 2, 3, 4) identiques qui sont disposées en symétrie de miroir l'une par rapport à l'autre et qui présentent une face de dépouille commune (6) et des faces de coupe (5) situées sur des côtés opposés l'un à l'autre.

10. Elément rapporté de coupe selon la revendication 1 à 9,
**caractérisé en ce que** les faces de coupe (5) disposées sur des côtés opposés, respectivement les premières portions d'arête de coupe rectilignes respectives de ces faces de coupe, forment, dans la vue de dessus d'une face de dépouille, un angle compris entre 5 et 30°, avantageusement entre 10 et 20°, en particulier un angle à peu près égal à 16° ± 2°.

11. Elément rapporté de coupe selon l'une des revendications 1 à 10, **caractérisé en ce que** l'élément rapporté de coupe comporte au moins deux arêtes de coupe (1, 2, 3, 4) qui sont disposées en symétrie de miroir, qui présentent une face de coupe commune et qui sont formées par l'intersection de ces faces de coupe avec deux faces de dépouille prévues sur des côtés opposés de l'élément rapporté de coupe.

12. Elément rapporté de coupe selon l'une des revendications 1 à 11, **caractérisé en ce qu'**il est prévu un perçage de fixation (8) s'étendant perpendiculairement à la face de dépouille.

13. Elément rapporté de coupe selon l'une des revendications 11 ou 12, **caractérisé en ce que** les faces de dépouille opposées l'une à l'autre forment dans une vue de dessus de la face de coupe un angle compris entre 2 et 15°, avantageusement entre 4 et 8°.
